(19) Europäisches Patentamt European Patent Office Office européen des brevets

(11) **EP 1 761 801 B1**

(12) **FASCICULE DE BREVET EUROPEEN**

(45) Date de publication et mention de la délivrance du brevet:
**21.09.2011 Bulletin 2011/38**

(21) Numéro de dépôt: **05747803.4**

(22) Date de dépôt: **17.03.2005**

(51) Int Cl.:
***G01S 17/88*** *(2006.01)*

(86) Numéro de dépôt international:
**PCT/EP2005/051239**

(87) Numéro de publication internationale:
**WO 2005/114252 (01.12.2005 Gazette 2005/48)**

(54) **DISPOSITIF DE MESURE A FAIBLE COUT DE DECALAGE EN FREQUENCE PAR EFFET DOPPLER**

KOSTENGÜNSTIGE MESSVORRICHTUNG FÜR DOPPLER-FREQUENZVERSCHIEBUNG

LOW-COST DOPPLER FREQUENCY SHIFT MEASURING DEVICE

(84) Etats contractants désignés:
**DE FR GB NL**

(30) Priorité: **04.05.2004 FR 0404760**

(43) Date de publication de la demande:
**14.03.2007 Bulletin 2007/11**

(73) Titulaire: **THALES**
**92200 Neuilly sur Seine (FR)**

(72) Inventeurs:
- **BAILLON, Bertrand,**
  **THALES Intellectual Property**
  **F-94117 ARCUEIL Cedex (FR)**
- **SCHLOTTERBECK, J.P.,**
  **THALES Intellectual Property**
  **F-94117 ARCUEIL Cedex (FR)**
- **LACONDEMINE, Xavier,**
  **THALES Intellectual Property**
  **F-94117 ARCUEIL Cedex (FR)**

(74) Mandataire: **Lucas, Laurent Jacques**
**Marks & Clerk France**
**Conseils en Propriété Industrielle**
**Immeuble " Visium "**
**22, avenue Aristide Briand**
**94117 Arcueil Cedex (FR)**

(56) Documents cités:
**FR-A- 2 761 162     US-A- 4 818 071**
**US-A- 4 902 127     US-A1- 2003 151 732**
**US-B2- 6 608 669**

- **JAMES S W ET AL: "FIBRE OPTIC BASED REFERENCE BEAM LASER DOPPLER VELOCIMETRY" OPTICS COMMUNICATIONS, NORTH-HOLLAND PUBLISHING CO. AMSTERDAM, NL, vol. 119, no. 5/6, 15 septembre 1995 (1995-09-15), pages 460-464, XP000521060 ISSN: 0030-4018**

## Description

L'invention est relative à un dispositif de mesure d'un décalage Doppler de type optique.

Dans des dispositifs comportant une source laser et une détection cohérente hétérodyne, il peut être nécessaire de déterminer une variation de fréquence (effet Doppler) se produisant sur une partie du trajet du faisceau laser et résultant d'un phénomène physique que l'on désire compenser ou mesurer. Ceci est en particulier le cas des Lidars servant à mesurer la vitesse et la direction du vent par rétrodiffusion du faisceau laser sur des aérosols portés par le vent. Cette variation de fréquence est généralement déterminée par mélange du signal reçu avec un signal généré par un oscillateur local et affecté d'un décalage de fréquence qui est produit par un modulateur de type électro-optique ou acousto-optique (MAO).

Des dispositifs de ce genre sont aussi utilisés pour mesurer les vitesses des aéronefs par rapport au milieu environnant. Le dispositif est appelé dans ce cas d'utilisation "anémomètre".

Le document technique de Stephen W. James et al « Fibre optic based reference beam laser Doppler velocimetry » dans Optics Communications, North-Holland Publishing CO. AMSTERDAM, NL, vol. 119, no. 5/6, 15 septembre 1995 pages 460-464, XP000521060 ISSN :0030-4018 décrit un dispositif de mesure de vitesse par effet Doppler utilisant une source laser.

La demande de brevet Français FRA-A-2 761 162 de la société SEXTANT AVIONIQUE publiée le 25-09 1998 montre un autre dispositif de mesure de vitesse à effet Doppler pour engins volants, utilisant une source laser.

La distance de mesure définit le type de détection du décalage Doppler à mesurer et la puissance de la source lumineuse de l'anémomètre, ainsi, la détection peut être, soit une détection cohérente, soit une détection directe ou incohérente.

Dans le cas d'une détection cohérente hétérodyne le faisceau issu de la source de rayonnement lumineux (laser) est séparé en deux, une partie est mise en forme spatialement et envoyée dans la zone de mesure. Un modulateur acousto-optique décale la fréquence du faisceau de la voie de référence. On mélange ensuite le signal rétrodiffusé avec la référence décalée pour générer des interférences au niveau d'un détecteur.

Dans l'application d'anémomètre, un faisceau laser, généré par une source laser, est focalisé à une certaine distance de l'aéronef. Les aérosols, présents dans l'atmosphère, rétrodiffusent le faisceau incident produisant un décalage de sa fréquence à l'émission. La fréquence Doppler c'est-à-dire l'écart entre la fréquence des faisceaux de rétrodiffusion et le faisceau incident est détecté par un interféromètre pour déduire la vitesse de l'aéronef. On sait que la fréquence Doppler Fd a pour valeur :

$$Fd = 2v/\lambda$$

v étant la projection sur l'axe de visée du laser de la vitesse de l'aéronef par rapport au milieu ambiant (atmosphère) c'est-à-dire la référence par rapport à laquelle on souhaite mesurer la vitesse de déplacement de l'aéronef, λ étant la longueur d'onde du faisceau émis.

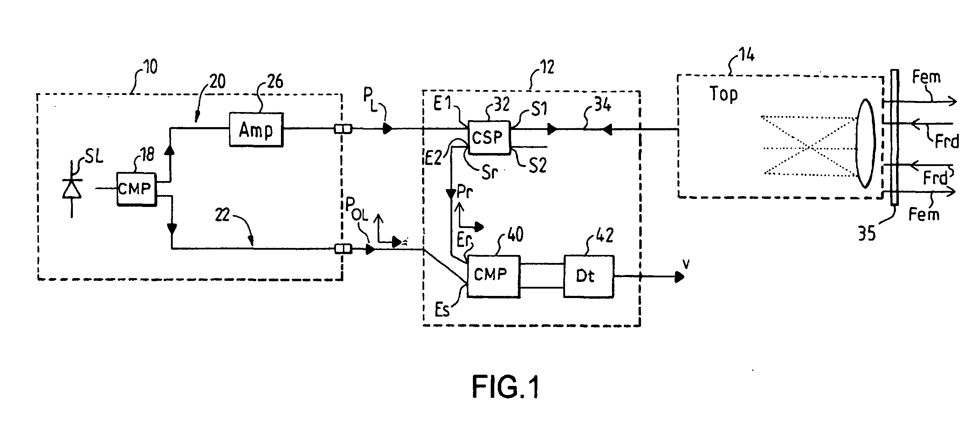

La figure 1 montre un synoptique d'un dispositif de mesure, de l'état de l'art, d'un décalage Doppler de type optique.

Le dispositif de la figure 1 comporte notamment une unité laser 10, une unité de mélange et détection 12 et une tête optique 14, ces éléments 10, 12, 14 correspondant aux principales fonctions du dispositif de mesure.

L'unité laser 10 comporte une source laser SL et un coupleur à maintien de polarisation (CMP) 18 fournissant un premier signal optique pour attaquer une voie de signal 20 et un second signal optique pour attaquer une voie de référence 22.

Le premier signal optique dans la voie de signal 20 est amplifié par un amplificateur optique (Amp) 26 fournissant un signal optique de puissance pour être émis dans le milieu de référence.

Le signal optique de puissance en sortie de la voie de signal 20 attaque, à travers un coupleur à séparation de polarisation (CSP) 32 et une liaison optique bidirectionnelle 34 de l'unité de mélange-détection 12, la tête optique 14 rayonnant un faisceau laser Fem dans le milieu de référence.

La tête optique 14 assure, d'une part, la focalisation du rayon laser émis Fem dans le milieu de référence et, d'autre part, capte les rayons rétrodiffusés Frd par le milieu dans une direction déterminée.

Les rayons retro-diffusés Frd captés par la tête optique, comportant éventuellement un décalage Doppler, sont envoyés par la liaison optique bidirectionnelle 34 vers le coupleur à séparation de polarisation 32 qui fournit, du fait de la rotation de polarisation du signal rétrodiffusé par rapport au signal émis, grâce à une lame optique λ/4 35, à une sortie de retour de signal Sr, un signal optique de rétrodiffusion Pr.

L'unité de mélange détection 12 comporte, en outre, un coupleur à maintien de polarisation (CMP) 40 recevant, à une de ses entrées Es, le signal de référence Pol en sortie de la voie de référence de l'unité laser 10 et, à une autre entrée Er, le signal rétrodiffusé Pr. Le coupleur CMP 40 effectue le mélange du signal de référence et du signal de retro-diffusion comportant éventuellement l'effet Doppler générant des interférences appliquées à un détecteur Dt 42.

Un traitement de signal appliqué au détecteur Dt 42 permet alors l'extraction du décalage Doppler, la mesure de la vitesse v de déplacement.

Dans d'autres structures non représentées, la détection de l'effet Doppler, peut être de type hétérodyne et, à cet effet, un décalage de la fréquence d'une des deux voies est effectuée à l'aide, par exemple, d'un modulateur acousto-optique (décalage en fréquence par le MAO)

On souhaite réduire le coût de ces types de structures du fait du nombre d'éléments nécessaires à cette détection et à cet effet, l'invention propose un dispositif de mesure de décalage de fréquence par effet Doppler de type optique comportant :

- un coupleur à séparation de polarisation CSP, comportant quatre ports E1, E2, S1, S2, configuré de telle façon qu'un signal optique appliqué à son port E1 est transmis à son port S1 sans changement de polarisation, le port S1 étant un port bidirectionnel de signal,
- une voie de signal optique fournissant à travers le coupleur à séparation de polarisation CSP, par le port S1 bidirectionnel de signal et une tête optique, un faisceau lumineux de signal (Fem) éclairant un milieu de référence, le coupleur à séparation de polarisation CSP recevant, par le dit port S1 bidirectionnel, un faisceau lumineux de rétrodiffusion (Frd) renvoyé par le milieu de référence,
- une lame optique λ/4 (35) dans le trajet du signal optique retrodiffusé (Frd) par le milieu, ledit signal optique rétrodiffusé Frd étant dirigé par la tête optique (14) vers le port S1 du coupleur à séparation de polarisation CSP avec une polarisation croisée par rapport à la polarisation du signal émis par le coupleur à séparation de polarisation CSP (62),
- une voie de référence appliquée au port S2 du coupleur à séparation de polarisation CSP fournissant un faisceau lumineux de référence pour la détection du décalage de fréquence par l'effet Doppler, le décalage en fréquence étant déterminé par l'écart de fréquence entre le signal lumineux (Fem) éclairant le milieu de référence et le faisceau lumineux (Frd) renvoyé par le milieu de référence,
- une source laser (SL) fournissant un faisceau lumineux à une entrée A d'un coupleur optique à maintien de polarisation CMP, le coupleur optique à maintien de polarisation CMP fournissant par une sortie optique de référence Sr le faisceau lumineux de référence formant la voie de référence et, par une sortie optique de signal Ss, un faisceau lumineux de signal, de même polarisation que la polarisation du faisceau lumineux de la voie de référence, formant la voie de signal,

caractérisé en ce que la polarisation du faisceau lumineux de la voie de signal (60) en sortie optique de signal Ss étant tournée pour être perpendiculaire à celle du faisceau lumineux de la voie de référence (58), la direction de polarisation du faisceau lumineux de la voie de référence (58) appliqué au port S2 du coupleur à séparation de polarisation CSP (62) et celle du faisceau (Frd) renvoyé par le milieu de référence appliqué au port S1 du coupleur à séparation de polarisation CSP (62), sont parallèles, ledit coupleur à séparation de polarisation CSP (62) fournissant au port E2 un signal de battement Bs entre la fréquence du faisceau lumineux de référence appliqué au port S2 et la fréquence du faisceau lumineux de rétrodiffusion (Frd) appliqué au port S1 comportant éventuellement le décalage Doppler.

Le coupleur à séparation de polarisation CSP comportant les quatre ports, optiques E1, E2 et S1, S2 est configuré de telle façon :

- qu'un signal optique appliqué à son port E1 est transmis à son port S1 sans changement de polarisation ;

qu'un signal optique appliqué à son port S1 produit, à son port E2, par battement avec un signal optique de référence appliqué à son port S2 un signal de battement Bs correspondant à l'écart en fréquence entre le faisceau de référence et le faisceau de rétrodiffusion par le milieu.

Un principal objectif de cette invention est la suppression du coupleur de mélange du faisceau comportant le décalage Doppler avec le faisceau de référence.

Un autre objectif est la réduction du coût de fabrication du dispositif de mesure ainsi que l'augmentation de sa fiabilité par la réduction du nombre de ses sous-ensembles.

L'invention sera mieux comprise par la description du dispositif de mesure du décalage Doppler, selon l'invention, en référence aux dessins annexés dans lesquels :

- la figure 1, déjà décrite, montre un synoptique d'un dispositif de mesure, de l'état de l'art, d'un décalage Doppler de type optique ;
- la figure 2, représente une réalisation du dispositif de mesure, selon l'invention ;

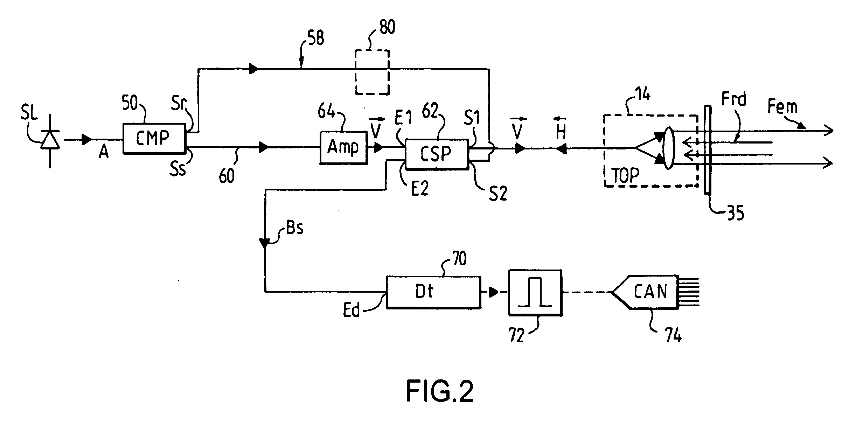

La figure 2, représente une réalisation du dispositif de mesure selon l'invention.

Le dispositif de la figure 2 comporte essentiellement :

- une source laser SL fournissant un faisceau lumineux à une entrée A d'un coupleur optique à maintien de polarisation CMP 50, le coupleur optique 50 fournissant par une sortie optique de référence Sr un faisceau lumineux de référence formant une voie de référence 58 et, par une sortie optique de signal Ss, un faisceau lumineux de signal, de même polarisation que la polarisation du faisceau de la voie de référence, formant une voie de signal 60. La polarisation du faisceau lumineux de la voie de signal 60, en sortie optique de signal Ss, est en suite tournée pour être perpendiculaire à celle du faisceau de la voie de référence 58 ;
- un coupleur à séparation de polarisation CSP 62 ayant quatre ports E1, E2, S1, S2.

Le coupleur CSP 62 reçoit par le port E1, à travers un amplificateur optique Amp 64, le faisceau lumineux de signal en sortie Ss du coupleur à maintien de polarisation CMP 50 de la voie de signal 60 et, par son port S2, le faisceau lumineux de référence en sortie Sr du coupleur à maintien de polarisation CMP 50 de la voie de référence 58. Le port E2 du coupleur à séparation de polarisation CSP 62 est connectée à une entrée Ed d'un détecteur de battement 70 fournissant un signal comportant le décalage Doppler.

De façon connue, le signal optique rétrodiffusé Frd par le milieu est dirigé par la tête optique 14 vers le port S1 du coupleur à séparation de polarisation CSP 62 avec une polarisation croisée (lame optique λ/4 35) par rapport à la polarisation du signal émis par le coupleur à séparation de polarisation CSP vers la tête optique 14.

Le signal rétrodiffusé, par mélange dans le coupleur à séparation de polarisation CSP 62 avec le signal de référence appliqué à son port S2 produit un signal de battement Bs apparaissant sur le port E2 du coupleur.

Le dispositif comporte, en sortie du détecteur de battement 70, un filtre de bande 72 suivi par un convertisseur analogique-numérique CAN 74 pour l'extraction du décalage Doppler.

Le signal de battement Bs comportant éventuellement l'effet Doppler est alors détecté par le détecteur 70, filtré par le filtre de bande 72 puis numérisé par le convertisseur analogique-numérique CAN 74 pour l'extraction du décalage Doppler.

Dans le dispositif de détection selon l'invention, on utilise tous les ports accessibles du coupleur à séparation de polarisation CSP. On injecte directement le faisceau lumineux de référence de la voie de référence 58 au port S2 du coupleur à séparation de polarisation et on réalise le dispositif de façon à ce que les directions de polarisation du faisceau de la voie de référence appliqué au port S2 du coupleur à séparation de polarisation CSP et celle du faisceau de rétrodiffussion Frd par le milieu de référence, appliqué au port S1 dudit coupleur, soient parallèles. La figure 2 montre par les vecteurs H et V, un exemple de directions de polarisation des faisceaux lumineux.

Dans la réalisation de la figure 2 selon l'invention, à titre d'exemple, la puissance du signal optique appliquée au port E1 du coupleur à changement de polarisation est de l'ordre de 30dBm le niveau du signal rétrodiffusé sur le port S1 est de l'ordre de -100dBm, le signal de référence appliqué au port S2 du coupleur est de l'ordre de 0dBm

Dans une variante de la réalisation de la figure 2, le dispositif comporte dans la voie de référence 58 un isolateur optique 80 améliorant l'isolement optique entre les respectifs ports Sr et S2 des deux coupleurs CMP 50 et CSP 62. L'isolateur optique 80 dans la voie de référence est représenté en traits pointillés sur la figure 2.

L'invention est applicable pour tous les types de détection, par exemple pour les détections hétérodynes (décalage en fréquence des deux voies) comportant un modulateur acousto-optique dans le trajet d'une des deux voies optiques.

L'invention s'applique dans le cas d'un fonctionnement continu d'émission continu du signal dans le milieu de référence ou d'une émission impulsionnelle.

L'invention est aussi applicable dans des architectures utilisant une modulation de la voie de signal (Q-swich, électro-optique).

L'invention comporte un intérêt économique du fait de la réduction du coût du dispositif de mesure, non seulement par la suppression du coupleur à maintien de polarisation 40 (voir figure 1) du dispositif de l'état de l'art, mais aussi, par la réduction du nombre de fibres optiques et de connecteurs optiques nécessaires.

L'invention permet, en outre, une diminution des pertes de couplage assurant ainsi des meilleures performances du dispositif.

**Revendications**

1. Dispositif de mesure de décalage de fréquence par effet Doppler de type optique comportant :

   - un coupleur à séparation de polarisation CSP (32, 62), comportant quatre ports E1, E2, S1, S2, configuré de telle façon qu'un signal optique appliqué à son port E1 est transmis à son port S1 sans changement de polarisation, le port S1 étant un port bidirectionnel de signal,
   - une voie de signal optique (20, 60) fournissant à travers le coupleur à séparation de polarisation CSP (32, 62), par le port S1 bidirectionnel de signal et une tête optique (14), un faisceau lumineux de signal (Fem) éclairant un milieu de référence, le coupleur à séparation de polarisation CSP recevant, par le dit port S1 bidirectionnel, un faisceau lumineux de rétrodiffusion (Frd) renvoyé par le milieu de référence,
   - une lame optique λ/4 (35) dans le trajet du signal optique retrodiffusé (Frd) par le milieu, ledit signal optique rétrodiffusé Frd étant dirigé par la tête optique (14) vers le port S1 du coupleur à séparation de polarisation CSP (32, 62) avec une polarisation croisée par rapport à la polarisation du signal émis par le coupleur à séparation de polarisation CSP (62),
   - une voie de référence (58) appliquée au port S2 du coupleur à séparation de polarisation CSP (32, 62) fournissant un faisceau lumineux de référence pour la détection du décalage de fréquence par l'effet Doppler, le décalage en fréquence étant déterminé par l'écart de fréquence entre le signal lumineux (Fem) éclairant le milieu de référence et le faisceau lumineux (Frd) renvoyé par le milieu de référence,
   - une source laser (SL) fournissant un faisceau lumineux à une entrée A d'un coupleur optique à maintien de polarisation CMP (50), le coupleur optique à maintien de polarisation CMP (50) fournissant par une sortie optique de référence Sr le faisceau lumineux de référence formant la voie de référence (58) et, par une sortie optique de signal Ss, un faisceau lumineux de signal, de même polarisation que la polarisation du faisceau lumineux de la voie de référence, formant la voie de signal (60),

**caractérisé en ce que** la polarisation du faisceau lumineux de la voie de signal (60) en sortie optique de signal Ss étant tournée pour être perpendiculaire à celle du faisceau lumineux de la voie de référence (58), la direction de polarisation du faisceau lumineux de la voie de référence (58) appliqué au port S2 du coupleur à séparation de polarisation CSP (62) et celle du faisceau (Frd) renvoyé par le milieu de référence appliqué au port S1 du coupleur à séparation de polarisation CSP (62), sont parallèles, ledit coupleur à séparation de polarisation CSP (62) fournissant au port E2 un signal de battement Bs entre la fréquence du faisceau lumineux de référence appliqué au port S2 et la fréquence du faisceau lumineux de rétrodiffusion (Frd) appliqué au port S1 comportant éventuellement le décalage Doppler.

2. Dispositif de mesure selon la revendication 1, **caractérisé en ce que** le coupleur à séparation de polarisation CSP (62) est configuré de telle façon qu'un signal optique appliqué à son port S1 produit, à son port E2, par battement avec le signal optique de référence appliqué à son port S2, un signal de battement Bs correspondant à l'écart en fréquence entre le faisceau de référence et le faisceau (Frd) renvoyé par le milieu.

3. Dispositif de mesure selon l'une des revendications 1 ou 2, **caractérisé en ce que** le coupleur à séparation de polarisation CSP (62) reçoit par le port E1, à travers un amplificateur optique Amp (64), le faisceau lumineux de signal en sortie Ss du coupleur à maintien de polarisation CMP (50) de la voie de signal (60) et, par son port S2, le faisceau lumineux de référence en sortie Sr du coupleur à maintien de polarisation CMP (50) de la voie de référence (58), le port E2 du coupleur à séparation de polarisation CSP (62) étant connectée à une entrée Ed d'un détecteur de battement (70) fournissant un signal comportant le décalage Doppler.

4. Dispositif de mesure selon la revendication 3, **caractérisé en ce qu'**il comporte, en sortie du détecteur de battement (70), un filtre de bande (72) suivi par un convertisseur analogique-numérique CAN (74) pour l'extraction du décalage Doppler.

5. Dispositif de mesure selon l'une des revendications 1 à 4, **caractérisé en ce qu'**il comporte dans la voie de référence (58) un isolateur optique (80) améliorant l'isolement optique entre les respectifs ports Sr et S2 des deux coupleurs, à maintient de polarisation CMP (50) et à séparation de polarisation CSP (62).

**Claims**

1. A device for measuring an optical type Doppler effect frequency shift, comprising:

   - a polarisation-splitting coupler CSP (32, 62), comprising four ports E1, E2, S1, S2 configured so that an optical signal applied to its port E1 is sent to its port S1 without a change of polarisation, the port S 1 being a bi-directional signal port,
   - an optical signal channel (20, 60) delivering, through the polarisation-splitting coupler CSP (32, 62), via the bi-directional signal port S1 and an optical head (14), a signal light beam (Fem) illuminating a reference medium, the polarisation-splitting coupler CSP receiving, via said bi-directional port S1, a scattered light beam (Frd) returned by the reference medium,
   - an optical edge $\lambda/4$ (35) in the path of the optical signal (Frd) scattered by the medium, said scattered optical signal Frd being directed by the optical head (14) towards the port S 1 of the polarisation-splitting coupler CSP (32, 62) with a polarisation that is transverse relative to the polarisation of the signal emitted by the polarisation-splitting coupler CSP (62),
   - a reference channel (58) applied to the port S2 of the polarisation-splitting coupler CSP (32, 62), delivering a reference light beam for detecting the Doppler effect frequency shift, the frequency shift being determined by the difference in frequency between the light signal (Fem) illuminating the reference medium and the light beam (Frd) returned by the reference medium,
   - a laser source (SL) delivering a light beam to an input A of an optical polarisation-retaining coupler CMP (50), said optical polarisation-retaining coupler CMP (50) delivering via a reference optical output Sr the reference light beam forming the reference channel (58) and, via an optical signal output Ss, a signal light beam, having the same polarisation as the light beam of the reference channel, forming the signal channel (60),

   **characterised in that** as the polarisation of the light beam of the signal channel (60) at the optical output of the signal Ss is turned so as to be perpendicular to the polarisation of the light beam of the reference channel (58), the direction of polarisation of the light beam of the reference channel (58) applied to the port S2 of the polarisation-splitting coupler CSP (62) and that of the beam (Frd) returned by the reference medium applied to the port S 1 of the polarisation-splitting coupler CSP (62) are parallel, said polarisation-splitting coupler CSP (62) delivering to the port E2 a beat signal Bs between the frequency of the reference light beam applied to the port S2 and the frequency of the scattered light beam (Frd) applied to the port S1, which beat signal may have the Doppler shift.

2. The measuring device according to claim 1, **characterised in that** the polarisation-splitting coupler CSP (62) is configured so that an optical signal applied to its port S 1 produces, at its port E2, by beats with the reference optical signal applied to its port S2, a beat signal Bs corresponding to the difference in frequency between the reference beam and the beam (Frd) returned by the medium.

3. The measuring device according to any one of claims 1 to 2, **characterised in that** the polarisation-splitting coupler CSP (62) receives via the port E1, through an optical amplifier Amp (64), the signal light beam output Ss from the polarisation-retaining coupler CMP (50) of the signal channel (60) and, via its port S2, the reference light beam output Sr from the polarisation-retaining coupler CMP (50) of the reference channel (58), the port E2 of the polarisation-splitting coupler CSP (62) being connected to an input Ed of a beat detector (70) delivering a signal comprising the Doppler shift.

4. The measuring device according to claim 3, **characterised in that** it comprises, at the output of the beat detector (70), a band pass filter (72) followed by an analogue-digital encoder CAN (74) for extracting the Doppler shift information.

5. The measuring device according to any one of claims 1 to 4, **characterised in that** it comprises, in the reference channel (58), an optical isolator (80) improving the optical isolation between the respective ports Sr and S2 of the two couplers, namely the polarisation-retaining coupler CMP (50) and the polarisation-splitting coupler CSP (62).

**Patentansprüche**

1. Vorrichtung zum Messen einer optischen Doppler-Effekt-Frequenzverschiebung, die Folgendes umfasst:

   - einen Polarisationsteilungskoppler CSP (32, 62) mit vier Ports E1, E2, S1, S2, die so konfiguriert sind, dass ein an seinen Port E1 angelegtes optisches Signal ohne Änderung der Polarisation an seinen Port S1 angelegt wird, wobei Port S1 ein bidirektionaler Signalport ist,
   - einen optischen Signalkanal (20, 60) zum Leiten eines ein Referenzmedium beleuchtenden Signallichtstrahls (Fem) durch den Polarisationsteilungskoppler CSP (32, 62) über den bidirektionalen Signalport S1 und einen optischen Kopf (14), wobei der Polarisationsteilungskoppler CSP, über den bidirektionalen Port S1, einen vom Referenzmedium zurückgestreuten Lichtstrahl (Frd) empfängt,
   - eine optische Klinge λ/4 (35) im Pfad des vom Medium zurückgestreuten optischen Signals (Frd), wobei das zurückgestreute optische Signal Frd vom optischen Kopf (14) in Richtung Port S1 des Polarisationsteilungskopplers CSP (32, 62) mit einer Polarisation quer zur Polarisation des von dem Polarisationsteilungskopller CSP (62) emittierten Signals geleitet wird,
   - einen auf Port S2 des Polarisationsteilungskopplers CSP (32, 62) geschalteten Referenzkanal (58), der einen Referenzlichtstrahl zum Erkennen der Doppler-Effekt-Frequenzverschiebung liefert, wobei die Frequenzverschiebung anhand der Frequenzdifferenz zwischen dem das Referenzmedium beleuchtenden Lichtsignal (Fem) und dem von dem Referenzmedium zurückgesandten Lichtstrahl (Frd) ermittelt wird,
   - eine Laserquelle (SL), die einen Lichtstrahl zu einem Eingang A eines Polarisationserhaltungs-Optokopplers CMP (50) liefert, wobei der Polarisationserhaltungs-Optokoppler CMP (50) über einen optischen Referenzausgang Sr den den Referenzkanal (58) bildenden Referenzlichtstrahl und, über einen optischen Signalausgang Ss, einen Signallichtstrahl mit derselben Polarisation wie der des den Signalkanal (60) bildenden Lichtstrahls des Referenzkanals sendet,

**dadurch gekennzeichnet, dass** die Polarisation des Lichtstrahls des Signalkanals (60) am optischen Ausgang des Signals Ss so gedreht wird, dass sie lotrecht zur Polarisation des Lichtstrahls des Referenzkanals (58) ist, wobei die Richtung der Polarisation des Lichtstrahls des Referenzkanals (58), auf Port S2 des Polarisationsteilungskopplers CSP (62) geschaltet, und die des vom Referenzmedium zurückgesandten Strahls (Frd), auf Port S1 des Polarisationsteilungskopplers CSP (62) geschaltet, parallel sind, wobei der Polarisationsteilungskoppler CSP (62) an Port E2 ein Schwebungssignal Bs zwischen der Frequenz des an den Port S2 angelegten Referenzlichtstrahls und der Frequenz des an Port S1 angelegten zurückgestreuten Lichtstrahls (Frd) anlegt, das die Doppler-Verschiebung haben kann.

**2.** Messvorrichtung nach Anspruch 1, **dadurch gekennzeichnet, dass** der Polarisationsteilungskoppler CSP (62) so konfiguriert ist, dass ein an seinen Port S1 angelegtes optisches Signal an seinem Port E2 durch Schwebung mit dem an seinen Port S2 angelegten optischen Referenzsignal ein Schwebungssignal Bs erzeugt, das der Frequenzdifferenz zwischen dem Referenzstrahl und dem von dem Medium zurückgesandten Strahl (Frd) entspricht.

**3.** Messvorrichtung nach Anspruch 1 oder 2, **dadurch gekennzeichnet, dass** der Polarisationsteilungskoppler CSP (62) über Port E1, durch einen optischen Verstärker Amp (64), den Ausgangssignallichtstrahl Ss vom Polarisationserhaltungskoppler CMP (50) des Signalkanals (60) und, über seinen Port S2, den Ausgangsreferenzlichtstrahl Sr vom Polarisationserhaltungskoppler CMP (50) des Referenzkanals (58) empfängt, wobei Port E2 des Polarisationsteilungskopplers CSP (62) mit einem Eingang Ed eines Schwebungsdetektors (70) verbunden ist, der ein Signal liefert, das die Doppler-Verschiebung umfasst.

**4.** Messvorrichtung nach Anspruch 3, **dadurch gekennzeichnet, dass** sie am Ausgang des Schwebungsdetektors (70) ein Bandpassfilter (72) gefolgt von einem Analog-Digital-Codierer CAN (104) zum Extrahieren der Doppler-Verschiebung umfasst.

**5.** Messvorrichtung nach einem der Ansprüche 1 bis 4, **dadurch gekennzeichnet, dass** sie im Referenzkanal (58) einen optischen Isolator (80) zum Verbessern der optischen Trennung zwischen den jeweiligen Ports Sr und S2 der beiden Koppler umfasst, nämlich dem Polarisationserhaltungskoppler CMP (50) und dem Polarisationsteilungskoppler CSP (62).

Fem  Frd  Frd  Fem

35

Top  14

12  34  S1  S2

32  CSP  Sr  Dt  42

E1  Pr  CMP  40

E2  Er  Es

V

PL  M

POL  M

Amp  26

20  22

18  CMP

SL

10

**FIG.1**

FIG.2

EP 1 761 801 B1

## RÉFÉRENCES CITÉES DANS LA DESCRIPTION

**Documents brevets cités dans la description**

- WO 2761162 A

**Littérature non-brevet citée dans la description**

- Fibre optic based reference beam laser Doppler velocimetry. **Stephen W. James et al.** Optics Communications. North-Holland Publishing CO, 15 Septembre 1995, vol. 119, 460-464